# EUROPÄISCHE PATENTSCHRIFT

(11) **EP 1 067 318 B1**
(45) Veröffentlichungstag und Bekanntmachung des Hinweises auf die Patenterteilung: **23.07.2008**
(21) Anmeldenummer: 00110485.0
(22) Anmeldetag: 17.05.2000
(51) Int. Cl.: F16H 61/04, F16H 3/12, F16D 23/06

(54) **Verfahren zum Lastschalten eines Antriebsstranges, lastschaltbarer Antriebsstrang und Kupplungseinrichtung hierfür**
Method for power shifting of a drive line, transmission and clutch device therefor
Méthode pour le changement de vitesses d'un train d'engrenages, transmission et dispositif d'embrayage associés

(30) Priorität: 05.07.1999 DE 19930972
(43) Veröffentlichungstag der Anmeldung: 10.01.2001
(73) Patentinhaber: GETRAG Getriebe- und Zahnradfabrik Hermann Hagenmeyer GmbH & Cie KG, 74199 Untergruppenbach (DE)
(72) Erfinder: Leitermann, Wulf, 70806 Kornwestheim (DE); Seufert, Martin, 71711 Steinheim (DE); Rinderknecht, Stephan, Dr., 72810 Gomaringen (DE)
(74) Vertreter: Steil, Christian

(56) Entgegenhaltungen:
- WO-A-99/13237
- DE-A1- 2 613 388
- DE-A1- 19 859 458

## Beschreibung

Die vorliegende Erfindung betrifft ein Verfahren zum Lastschalten eines Antriebsstranges für ein Kraftfahrzeug gemäß dem Oberbegriff des Anspruchs 1 und einen lastschaltbaren Antriebsstrang gemäß dem Oberbegriff des Anspruchs 9. Ein siolches Verfahren und ein solcher Antriebsstrang sind aus der DE 19859458 A1 bekannt.

Ein weiterer Antriebsstrang und ein weiteres Verfahren zum Lastschalten eines Antriebsstranges sind aus der DE 197 35 759 A1 bekannt.

Bei den Antriebssträngen für Kraftfahrzeuge unterscheidet man klassischerweise zwischen sogenannten Automaten mit hydrodynamischem Wandler und Planetenradsätzen, und den handgeschalteten Getrieben in Vorgelege-Bauweise mit zentraler Trenn- und Anfahrkupplung.

Während Automatikgetriebe inzwischen vom Komfort her überwiegend zufriedenstellend sind, leiden sie an dem Nachteil eines vergleichsweise schlechten Wirkungsgrades und haben ein höheres Gewicht und sind in der Regel nicht so kostengünstig wie Handschaltgetriebe.

Nicht nur aus Komfortgründen, sondern auch aus Gründen eines besseren Wirkungsgrades, insbesondere bei E-Gas, entwickelt sich seit einigen Jahren eine Tendenz hin zu sogenannten automatischen Schaltgetrieben (ASGs). Diese basieren auf herkömmlichen Handschaltgetrieben, werden jedoch mittels Aktuatoren hydraulisch und/oder elektromotorisch betätigt. Speziell im sogenannten Automatikmodus, bei dem auch die Anfahr- und Trennkupplung koordiniert mit dem Stufengetriebe und dem Motor angesteuert wird, leiden die ASGs subjektiv generell an einem nicht vollkommen zufriedenstellenden Komfort. Denn Gangwechsel werden bei Stufengetrieben durchgeführt, indem Losräder mit der ihnen zugeordneten Welle formschlüssig verbunden werden, wozu die zentrale Trennkupplung geöffnet wird. Es tritt also eine Zugkraftunterbrechung ein. Diese wird insbesondere bei automatischen Schaltvorgängen als störend empfunden. Gerade die formschlüssige Verbindung zwischen dem Losrad und der Welle ist es jedoch, die für den guten Wirkungsgrad eines solchen ASG's verantwortlich ist. Denn nach dem Einlegen eines Ganges ist keine weitere Energiezufuhr zu dem Getriebe notwendig. Bei Automatikgetrieben hingegen ist auch bei eingelegtem Gang ständig eine Energiezufuhr notwendig, um beispielsweise eine Bandbremse im Kraftschluß zu halten.

Den Nachteil der Notwendigkeit einer ständigen Energiezufuhr haben auch bisher selten realisierte Antriebsstrang-Konzepte wie das sogenannte Doppelkupplungsgetriebe (ein Getriebe mit zwei Trennkupplungen und zwei parallelen Kraftübertragungszweigen) und Vorgelege-Getriebe, bei denen die herkömmlichen Synchroneinheiten zum Verbinden eines Losrades mit der Welle ersetzt sind durch Lamellenkupplungen.

Auch gibt es Lösungen, bei denen mit nur einer zentralen Trennkupplung und zwei getriebeinternen Kraftübertragungszweigen während eines Gangwechsels durch kurzzeitiges erneutes Schließen der Trennkupplung Zugkraft auf die Antriebsräder über den zweiten, gerade nicht geschalteten Kraftübertragungszweig gelegt wird.

Parallele Kraftübertragungszweige in Getrieben erfordern jedoch generell, daß sogenannte Hohlwellen bereitgestellt werden, die weder vom Kosten-Gesichtspunkt noch vom Gewicht her eine optimale Lösung darstellen.

Aus der eingangs genannten DE 197 35 759 A1 ist ein Verfahren zum Steuern eines automatischen Antriebsstranges mit einem ASG und einer zentralen Trennkupplung bekannt.

In dem Getriebe sind als Schaltkupplungen zum Verbinden eines Losrades mit einer Welle sogenannte Ziehkeilkupplungen vorgesehen, die rein formschlüssig wirken. Alternativ hierzu sollen auch Klauenkupplungen verwendbar sein.

Es wird vorgeschlagen, beim Einlegen eines Ganges die Hauptkupplung nicht wie herkömmlich vollständig zu öffnen, sondern im Schlupfzustand zu halten, so daß sich der Gang trotz der zunächst generell vorliegenden Drehzahl-Differenz zwischen Losrad und Welle einlegen läßt. Das Betätigen der Ziehkeilkupplung, also das Einlegen des Ganges, soll sehr schnell erfolgen, und zwar dann, wenn die Drehwinkelposition des Ziehkeiles mit der Drehwinkelposition der jeweiligen Längsnut in dem zu schaltenden Losrad in Überdeckung steht.

Dieses Antriebsstrang-Konzept ist weder vom Komfort her akzeptabel, noch scheint es sehr materialschonend zu sein. Auch sind Drehwinkel-Sensoren mit hoher Auflösung und schnellem Ansprechverhalten notwendig, um den Schaltbereitschafts-Zustand schnell und genau erkennen und an den Aktuator für den Ziehkeil weiterleiten zu können.

Schließlich gibt es bei lastschaltbaren Antriebssträngen auf der Grundlage eines Stufengetriebes und einer zentralen Trennkupplung Ansätze, die Drehzahl der Welle, an denen Losräder gelagert sind, zentral zu beeinflussen, beispielsweise mittels zentralen Bremseinrichtungen und/oder zentralen Drehantrieben zum Erhöhen der Drehzahl der Welle. Auch diese Ansätze haben sich bislang jedoch nicht durchsetzen können.

Vor diesem Hintergrund besteht das der Erfindung zugrunde liegende Problem darin, ein Verfahren zum Lastschalten eines Antriebsstranges für ein Kraftfahrzeug bzw. einen solchen Antriebsstrang bereitzustellen, wobei der Antriebsstrang einerseits geringe Kosten und einen hohen Wirkungsgrad besitzen soll und andererseits komfortable Schaltvorgänge ermöglicht.

Diese Aufgabe wird durch das Verfahren nach Anspruch 1 sowie durch den Antriebsstrang nach Anspruch 9 gelöst.

Bei dem eingangs genannten Antriebsstrang wird diese Aufgabe dadurch gelöst, daß die Kupplungseinrichtung eine Reibungskupplung aufweist, mittels der die Drehzahlen von Losrad und Welle aneinander angleichbar sind, bevor das Losrad und die Welle formschlüssig miteinander verbunden werden, und dadurch, daß die Steuereinrichtung so programmiert ist, daß das anstehende Drehmoment von der Reibungskupplung und/oder wenigstens einer weiteren Reibungskupplung wenigstens so lange gehalten wird, bis der Formschluß zwischen Losrad und Welle erreicht ist.

Bei der eingangs genannten Kupplungseinrichtung wird diese Aufgabe dadurch gelöst, daß die Reibungskupplung und die formschlüssige Kupplung unabhängig voneinander ansteuerbar sind.

Es erfolgt eine Abkehr von dem Gedanken, eine formschlüssige Verbindung zwischen Welle und Losrad sehr schnell und unmittelbar erfolgen zu lassen. Stattdessen werden bei wenigstens teilweise geschlossener Trennkupplung die Drehzahlen von Losrad und Welle zunächst aneinander angeglichen, und zwar mittels einer Reibungskupplung. Die Reibungskupplung muß dabei während des Anpassens der Drehzahlen das eingangsseitig über die Trennkupplung anstehende Drehmoment übertragen. In der Regel wird die Reibungskupplung dabei betätigt, während der vorherige Gang noch eingelegt ist, und zwar so lange, bis das Drehmoment wenigstens teilweise von der Reibungskupplung übernommen worden ist. Erst dann wird der vorherige Gang ausgelegt. Es versteht sich somit, daß die Reibungskupplung entweder entsprechend dimensioniert sein muß, um das über die Trennkupplung anstehende Drehmoment übertragen zu können. Andererseits muß nicht notwendigerweise das volle Motormoment von der Reibungskupplung übertragen werden. Durch einen gezielten Eingriff auf den Aktuator der Trennkupplung kann diese teilweise geöffnet werden, um das getriebeeingangsseitig anstehende Drehmoment zu verringern. Auch ist es möglich, durch einen gezielten Eingriff in das Motormanagement das Drehmoment zu verringern, insbesondere natürlich dann, wenn ein E-Gas vorgesehen ist.

Entscheidend ist ferner, daß das Drehmoment von der Reibungskupplung und/oder einer weiteren Reibungskupplung so lange gehalten wird, bis der Formschluß zwischen Losrad und Welle des einzulegenden Ganges erreicht ist. Erst dann kann die Reibungskupplung wieder öffnen, da das Drehmoment dann über die formschlüssige Verbindung zwischen Losrad und Welle auf die Antriebsräder des Kraftfahrzeuges gelegt wird. Es versteht sich vorliegend, daß der Begriff formschlüssige Verbindung bedeutet, daß zum Aufrechterhalten des Formschlusses keine oder im wesentlichen keine Energiezufuhr erforderlich ist. Daher hat der erfindungsgemäße Antriebsstrang einen besonders guten Wirkungsgrad. Der Komfort beim Schalten ist besonders gut, da keine Zugkraftunterbrechung eintritt. Denn über die Trennkupplung und die Reibungskupplung wird ständig Drehmoment auf die Antriebsräder des Kraftfahrzeuges geleitet. Dabei erfolgt auch der Übergang von der einen formschlüssigen Verbindung des auszulegenden Ganges zur formschlüssigen Verbindung des einzulegenden Ganges komfortabel und ruckfrei, da die Reibungskupplung für ein Angleichen der Drehzahlen in die Elemente des einzulegenden Ganges sorgt.

Die Kupplungseinrichtung unterscheidet sich insofern in der Regel auch von einer Synchroneinheit, wie sie heutzutage überwiegend in Handschaltgetrieben eingesetzt wird. Die heutzutage überwiegend in Synchroneinheiten eingesetzten Synchronkupplungen sind durchgehend als Sperr-Synchronisierungskupplungen ausgebildet. Dabei sorgt ein Sperrglied auf mechanische Art und Weise dafür, daß die formschlüssige Verbindung erst hergestellt werden kann, wenn absoluter Gleichlauf durch Kraftschluß erzielt ist. Da nach dem Herstellen des absoluten Gleichlaufes das Sperrglied in Freigabe-Stellung zu bewegen ist, wozu der Kraftschluß wieder aufgehoben werden muß, entsteht beim Übergang vom Kraftschluß auf Formschluß eine Zugkraft-Unterbrechung. Diese ist bei herkömmlichen Handschaltgetrieben ohne Belang, da die Massen der drehzahlmäßig anzugleichenden Elemente gering und insofern die zu übertragenden Drehmomente klein sind. Auch folgt bei herkömmlichen Handschaltgetrieben das Durchschalten von Kraftschluß in Formschluß nicht unter Last. Erfindungsgemäß wird daher vorgesehen, im Gegensatz zu herkömmlichen Sperr-Synchronisierungen das anstehende Drehmoment mittels der Reibungskupplung so lange zu halten, bis der Formschluß zwischen Losrad und Welle erreicht ist.

Gemäß der Erfindung erfolgt das Angleichen der Drehzahlen von Losrad und Welle mittels der Reibungskupplung und wenigstens einer weiteren Reibungskupplung, die einer weiteren Kupplungseinrichtung eines weiteren Radsatzes zugeordnet ist.

Aufgrund der Tatsache, daß das Drehmoment mittels einer Reibungskupplung übertragen werden soll, ist es von Vorteil, dieses Drehmoment auf mehrere, ohnehin vorhandene Reibungskupplungen zu verteilen. So ist beispielsweise bei einer typischen Radsatzanordnung in einem lastschaltbaren Stufengetriebe jeweils eine Schaltmuffe für die Kupplungseinrichtungen eines ersten und vierten Ganges, des zweiten und sechsten Ganges und des dritten und fünften Ganges vorgesehen. Somit kann beispielsweise bei einem Gangwechsel vom ersten in den zweiten Gang neben der Reibungskupplung des Losrades des zweiten Ganges parallel die Reibungskupplung des Losrades des dritten Ganges im Schlupfbetrieb betrieben werden, um das anstehende Drehmoment über den Radsatz des dritten Ganges auf die Abtriebswelle zu übertragen. Es versteht sich natürlich, daß dabei nicht beide Reibungskupplungen im Kraftschluß betrieben werden können, da das Getriebe dann insgesamt sperren würde. Unter Umständen ist es auch denkbar, nach dem Auslegen des ersten Ganges neben den Reibungskupplungen des zweiten und des dritten Ganges auch die des vierten Ganges schlupfend zu betätigen, sofern dies in dem relativ kurzen zeitlichen Fenster bis zum Formschluß des Radsatzes des zweiten Ganges überhaupt noch möglich ist.

Gemäß einer weiteren bevorzugten Ausführungsform erfolgt das Angleichen der Drehzahlen von Losrad und Welle ausschließlich mittels der einen Reibungskupplung der Kupplungseinrichtung.

Bei der alternativen Art des Angleichens der Drehzahlen von Losrad und Welle ist der Steueraufwand wesentlich geringer.

In beiden Fällen ist es jedoch bevorzugt, wenn nach dem Angleichen der Drehzahlen von Losrad und Welle das anstehende Drehmoment ausschließlich von wenigstens einer der weiteren Reibungskupplung wenigstens so lange gehalten wird, bis der Formschluß erreicht ist.

Dadurch, daß in der Zeitspanne zwischen dem Angleichen der Drehzahlen, also im wesentlichen dem Kraftschluß der einen Reibungskupplung und dem Erreichen des Formschlusses das anstehende Drehmoment von einer weiteren Reibungskupplung übernommen ist, kann bei der Kupplungseinrichtung des einzulegenden Ganges ein Übergang vom weitgehenden Kraftschluß zum Formschluß im wesentlichen unter Lastfreiheit erzielt werden. Dies bedeutet, daß gegebenenfalls als Kupplungseinrichtungen sogar herkömmliche Sperr-Synchronisierungen Anwendung finden können.

Besonders bevorzugt ist es insgesamt, wenn die Drehzahlen des Losrades und der Welle gemessen werden und wenn die Drehzahlen als angeglichen gelten, wenn der Betrag der Drehzahl-Differenz kleiner ist als ein vorbestimmter Grenzwert.

Dadurch, daß die Differenz-Drehzahl bei Schaltvorgängen bestimmbar ist, ist ein mechanisches Sperrglied herkömmlicher Bauart nicht unbedingt erforderlich. Denn die Steuereinrichtung des Antriebsstranges kann so programmiert werden, daß ein Durchschalten, also ein Herstellen des Formschlusses erst dann zugelassen wird, wenn der Betrag der Drehzahl-Differenz kleiner ist als ein vorbestimmter Grenzwert. Mit anderen Worten wird es möglich, ein "elektronisches Sperrglied" zu realisieren.

Von besonderem Vorzug ist es, wenn die Reibungskupplung als Kegelkupplung ausgebildet wird.

Eine Kegelkupplung, ähnlich wie bei einer Synchroneinheit, hat den Vorteil, daß die zum formschlüssigen Durchschalten erforderliche Axialbewegung einer Schaltmuffe an der Welle auch zum Herstellen eines Reibschlusses herangezogen werden kann. Mit anderen Worten ist es wie beispielsweise bei einer Bandbremse nicht notwendig, radial wirkende Betätigungsmittel für die Reibungskupplung vorzusehen. Rein axiale Reibflächen haben den Nachteil eines größeren radialen Platzbedarfes.

Erfindungsgemäß weist die Kupplungseinrichtung eine formschlüssige Kupplung auf, wobei die Reibungskupplung der Kupplungseinrichtung und die formschlüssige Kupplung über eine Koppeleinrichtung miteinander gekoppelt und mittels eines einzelnen Aktuators so ansteuerbar sind, daß die Kupplungseinrichtung unter Last betätigbar ist.

Die Koppeleinrichtung sorgt dafür, daß die Reibungskupplung unter Last ein hinreichend großes Reibmoment aufbauen kann, um die Drehzahlen von Losrad und Welle aneinander anzugleichen, ohne daß die formschlüssige Kupplung betätigt wird. Somit ist nur ein einziger Aktuator notwendig, wodurch die Ansteuerung der Kupplungseinrichtung besonders einfach ist.

Dabei ist es besonders bevorzugt, wenn die Koppeleinrichtung mechanisch wirkt.

Auf diese Weise läßt sich eine Koppeleinrichtung in ohnehin vorhandene Schaltelemente bzw. Stellglieder der Kupplungseinrichtung integrieren.

Ferner ist es von Vorzug, wenn die Reibungskupplung und die formschlüssige Kupplung jeweils ein in axialer Richtung wirkendes Stellglied aufweisen und wenn die Koppeleinrichtung zwischen den Stellgliedern Axialkräfte von mehr als 300 N aufnimmt, bevor die Stellglieder in axialer Richtung gegeneinander versetzbar sind.

Auf diese Weise wird auf mechanische Weise besonders elegant gelöst, daß die Reibungskupplung unter Last betätigbar ist, also mit Axialkräften beaufschlagbar ist, die größer sind als 300 N. Im Vergleich hierzu wird bei einer herkömmlichen Sperrsynchronisierung bereits bei Axialkräften von mehr als 60 N durchgeschaltet, also der Formschluß hergestellt. Aufgrund der Koppeleinrichtung lassen sich daher auch unter Last hinreichend hohe Reibkräfte aufbauen, um für eine Drehzahlangleichung von Welle und Losrad zu sorgen.

Besonders bevorzugt ist es, wenn die Koppeleinrichtung Axialkräfte von mehr als 500 N, insbesondere mehr als 800 N aufnimmt.

Damit ist es mit anderen Worten möglich, daß auf die Reibungskupplung Axialkräfte von mehr als 500 N bzw. mehr als 800 N wirken können, um die erforderlichen Reibkräfte zum Drehzahlangleichen unter Last zu erzielen.

Gemäß einem weiteren bevorzugten Ausführungsbeispiel umfaßt die Reibungskupplung wenigstens einen drehfest mit dem Losrad verbundenen Reibkonus, wenigstens einen drehfest mit der Welle verbundenen und axial gegenüber der Welle versetzbaren Reibring und eine drehfest mit der Welle verbundene und axial gegenüber der Welle versetzbare Druckeinheit, die auf den Reibring wirkt, und die Axialkräfte aufnehmende Koppeleinrichtung ist zwischen der Druckeinheit und einem mit dem Aktuator verbundenen Stellglied vorgesehen.

Auf diese Weise läßt sich die Koppeleinrichtung auf konstruktiv besonders elegante Weise in die Elemente der Kupplungseinrichtung integrieren.

Besonders bevorzugt ist es dabei ferner, wenn der Reibring Sperrzähne aufweist, die einen spitzen, untersperrenden Sperrwinkel aufweisen.

Auf diese Weise kann erreicht werden, daß zwar beim Angleichen der Drehzahlen die Sperrbedingung herkömmlicher Sperr-Synchronisierungen nicht erfüllt wird, also mit anderen Worten kein absoluter Gleichlauf zwischen dem Reibring und dem Reibkonus des Losrades erzielt werden muß, bevor der Formschluß hergestellt werden kann. Andererseits wird durch die Sperrzähne eine Axialkraft aufgebaut, die zum Betätigen der Reibungskupplung unterstützend wirkt. Daher muß die Koppeleinrichtung nicht die ganzen Axialkräfte zur Verfügung stellen, die zum Aufbau der Reibleistung der Reibungskupplung erforderlich sind. Die Koppeleinrichtung kann also kleiner dimensioniert werden. Die Kupplungseinrichtung kann damit insgesamt kompakter bauen. Dadurch, daß durchgeschaltet werden kann, wenn noch kein absoluter Gleichlauf zwischen Losrad und Welle ausgebildet ist, tritt dann zwischen dem Kraftschluß und dem Formschluß der Kupplungseinrichtung kein Drehmomenteinbruch auf.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges;
- Fig. 2: eine schematische Teilansicht des Antriebsstranges der Fig. 1;
- Fig. 3: eine erfindungsgemäße Ausführungsform in einer ähnlichen Darstellung wie Fig. 2;
- Fig. 4: ein Zeitablaufdiagramm des Reib- bzw. Formschlusses bei der in Fig. 3 gezeigten Kupplungseinrichtung sowie des Weges des zugeordneten Aktuators beim Einlegen des zweiten Ganges;
- Fig. 5: ein Zeitablaufdiagramm einer alternativen Ausführungsform, bei der das Drehmoment auf eine weitere Reibungskupplung übergeben wird;
- Fig. 6A und 6B: eine schematische Teilschnittansicht und einen Ausschnitt aus einer Abwicklung einer alternativen Ausführungsform einer Kupplungseinrichtung mit Koppeleinrichtung;
- Fig. 7A und 7B: eine schematische Teilschnittansicht und einen Ausschnitt aus einer Abwicklung einer weiteren alternativen Ausführungsform einer Kupplungseinrichtung mit mechanischem Sperrglied; und
- Fig. 8: eine schematische Teilschnittansicht einer weiteren alternativen Ausführungsform einer Kupplungseinrichtung.

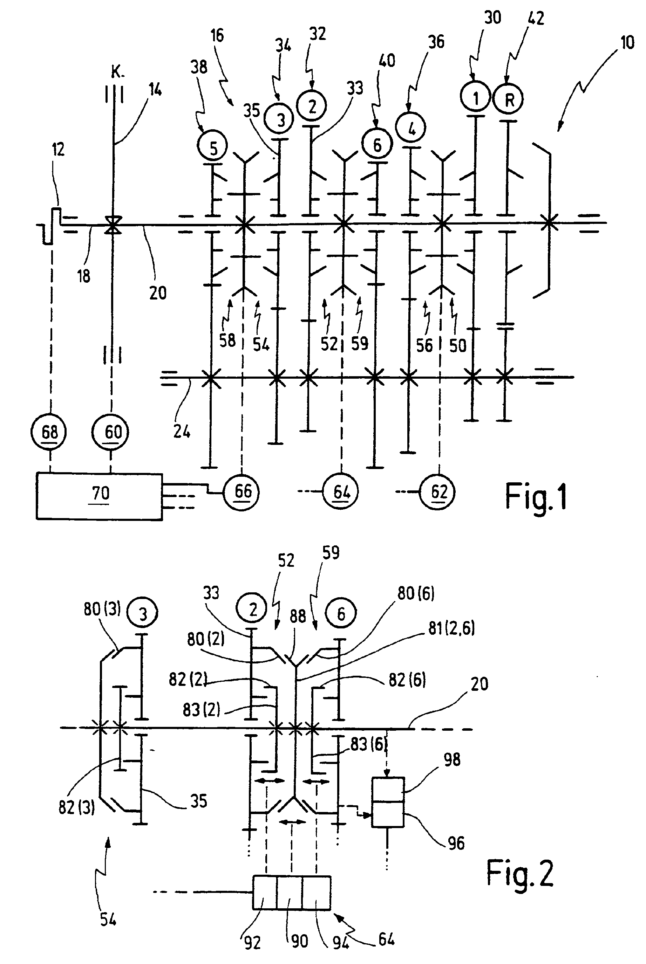

Eine Ausführungsform eines Antriebsstranges ist in Fig. 1 generell mit 10 bezeichnet.

Der Antriebsstrang 10 umfaßt einen Motor 12, insbesondere einen Verbrennungsmotor, der aufgrund seiner Leistungscharakteristik ein Getriebe mit mehreren Gängen notwendig macht. Ferner umfaßt der Antriebsstrang 10 eine zentrale Anfahr- und Trennkupplung 14 und ein Stufengetriebe 16 in Vorgelege-Bauweise.

Ein Eingangsglied der Trennkupplung 14 ist mit einer Motor-Ausgangswelle 18 verbunden. Ein Ausgangsglied der Trennkupplung 14 ist mit einer Getriebeeingangswelle 20 verbunden, die zugleich die Hauptwelle des Getriebes 16 darstellt.

Parallel zu der Hauptwelle 20 ist in dem Getriebe 16 eine Vorgelege-Welle 24 vorgesehen, die gleichzeitig als Abtriebswelle dient und gewöhnlich mit einem Differential gekoppelt ist.

Bei dem Stufengetriebe 16 handelt es sich um eine Anordnung für den Quereinbau in Kraftfahrzeugen. Es versteht sich jedoch, daß auch eine an sich bekannte Anordnung für den Längseinbau möglich sein soll.

Das Getriebe 16 umfaßt eine Mehrzahl von Radsätzen 30, 32, 34, 36, 38, 40 und 42 für den ersten bis sechsten bzw. den Rückwärtsgang R. Jeder Radsatz umfaßt ein an der Welle 20 gelagertes Losrad und ein hiermit kämmendes, drehfest mit der Vorgelege-Welle 24 verbundenes Festrad. Der Radsatz 42 für den Rückwärtsgang umfaßt ferner noch ein nicht mehr dargestelltes Rad zur Drehrichtungsumkehr.

Von den Losrädern sind in Fig. 1 das Losrad 33 des Radsatzes 32 und das Losrad 35 des Radsatzes 34 für den zweiten bzw. dritten Gang beispielhaft gezeigt.

Die Losräder sind jeweils mittels Kupplungseinrichtungen 50, 52, 54, 56, 58, 59 mit der Welle 20 verbindbar.

Die Radsätze 30 - 42 sind vom Getriebeeingang aus gesehen an der Welle 20 in der Reihenfolge 38, 34, 32, 40, 36, 30, 42 angeordnet. Ferner sind die Kupplungseinrichtungen 50, 56, die Kupplungseinrichtungen 52, 59 und die Kupplungseinrichtungen 54, 58 jeweils gekoppelt und betätigbar über schematisch angedeutete Aktuatoren 62, 64 bzw. 66. Zum Betätigen der Trennkupplung 14 ist ein Aktuator 60 vorgesehen, zum Beeinflußen der Motorsteuerung ein Aktuator 68.

Die Aktuatoren sind sämtlich mit einer zentralen Steuereinrichtung 70 verbunden und werden koordiniert zueinander von der Steuereinrichtung 70 angesteuert. Es versteht sich, daß die Steuereinrichtung 70 ferner Signale über verschiedene Ist-Parameter des Antriebsstranges empfängt, wie z.B. Drehzahl der Welle 20, Drehzahlen der Losräder der Radsätze 30 - 40, Drehzahl der Motor-Ausgangswelle 18 etc.

Die genannte Anordnung der Radsätze 30 - 42 und der Kupplungseinrichtungen 50 - 59 hat den Vorteil, daß ein Aktuator 62, 64, 66 jeweils zwei Gänge, die nicht benachbart zueinander sind, über eine gemeinsame Schaltmuffe bedienen kann.

Ergänzend wird angemerkt, daß das Getriebe 16 ferner eine nicht näher bezeichnete Kupplungseinrichtung für den Radsatz 42 des Rückwärtsganges aufweist. Diese Kupplungseinrichtung kann beispielsweise eine herkömmliche Sperr-Synchronkupplung sein.

Die Kupplungseinrichtungen 50 - 59 für die Vorwärtsgänge 1 - 6 weisen, was in Fig. 1 nur schematisch angedeutet ist, die Besonderheit auf, daß sie jeweils eine Reibungskupplung und eine formschlüssige Kupplung umfassen, die bei dieser Ausführungsform unabhängig voneinander betätigbar sind.

Dies ist in Fig. 2 in größerer Genauigkeit anhand einer Detailansicht der Kupplungseinrichtungen 52, 54, 59 für die Gänge 2, 3, 6 gezeigt.

Die Kupplungseinrichtung 52 für den zweiten Gang umfaßt eine Reibungskupplung 80(2), die mittels einer Schaltmuffe einer zentralen Schaltmuffe 88 betätigbar ist. Die Kupplungseinrichtung 52 umfaßt ferner eine formschlüssige Kupplung 82(2), die unabhängig von der Reibungskupplung 80(2) betätigbar ist.

Entsprechend weist die Kupplungseinrichtung 59 für den sechsten Gang eine Reibungskupplung 80(6) und eine formschlüssige Kupplung 82(6) auf.

Die Reibungskupplung 80(6) wird dabei mittels der gleichen Schaltmuffe 88 betätigt wie die Reibungskupplung 80(2).

Zum Betätigen der Schaltmuffe 88 und der zwei formschlüssigen Kupplungen 82(2) und 82(6) umfaßt der Aktuator 64 drei Einzel-Aktuatoren 90, 92, 94, die unabhängig voneinander ansteuerbar sind.

In Fig. 2 ist ferner in schematischer Form beispielhaft ein Drehzahlsensor 96 für die Drehzahl des Losrades des sechsten Ganges und ein Drehzahlsensor 98 für die Drehzahl der Welle 20 gezeigt. Die Drehzahlen sämtlicher Losräder lassen sich auch über die Drehzahl der Abtriebswelle 24 und das jeweilige Übersetzungsverhältnis indirekt bestimmen.

Ferner ist das Losrad 35 für den dritten Gang zu sehen, mit zugeordneter Kupplungseinrichtung 54, die entsprechend aufgebaut ist wie die Kupplungseinrichtungen 52, 59.

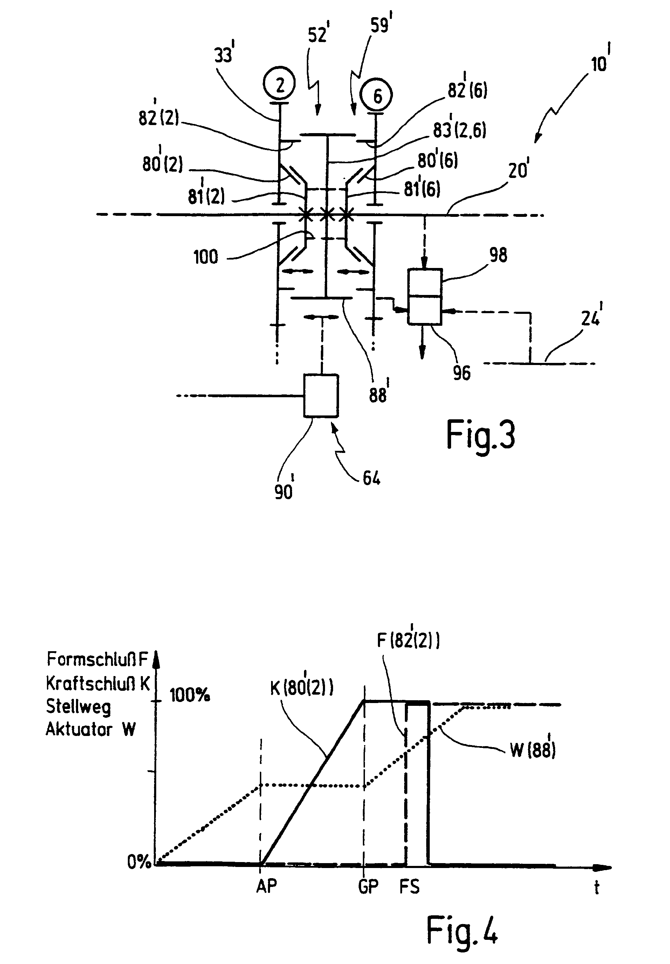

In Fig. 3 ist eine erfindungsgemäße Ausführungsform eines Details eines Antriebsstranges 10' in einer der Fig. 2 ähnlichen Ansicht dargestellt.

Im Unterschied zu den Kupplungseinrichtungen 52, 59, 54 der Fig. 2, bei denen die Reibungskupplung 80 und die formschlüssige Kupplung 82 jeweils vollkommen unabhängig voneinander ansteuerbar sind, sind diese zwei Kupplungen 80', 82' bei dem Antriebsstrang 10' durch eine schematisch angedeutete Koppeleinrichtung 100 miteinander verbunden. Ferner liegen hier in alternativer Ausgestaltung die Reibungskupplungen 80 innen und die formschlüssigen Kupplungen außen.

Die Koppeleinrichtung 100 hat zur Folge, daß sich die Kupplungseinrichtungen 52', 59' mit nur einem einzigen Aktuator 90' (64) ansteuern lassen, der an der Schaltmuffe 88' angreift. Die Kupplungseinrichtungen der übrigen Gänge sind entsprechend modifiziert.

Die Koppeleinrichtung 100 zwischen Reibungskupplung 80' und formschlüssiger Kupplung 82' ist so ausgebildet, daß eine Betriebsweise ermöglicht ist, wie sie in Fig. 4 dargestellt ist. Diese Betriebsweise ist mit dem Antriebsstrang 10 der Fig. 1 und 2 in entsprechender Weise auch realisierbar, wie sich anhand der nachfolgenden Beschreibung unmittelbar ergeben wird.

In Fig. 4 sind über der Zeit t aufgetragen der Kraftschluß K der Reibungskupplung 80'(2), der Formschluß F der formschlüssigen Kupplung 82'(2) sowie der Weg W der Schaltmuffe 88', und zwar beim Einlegen des zweiten Ganges.

Die Schaltmuffe 88' wird zunächst aus der neutralen Position heraus bewegt, bis zu einem Wegpunkt AP, bei dem die Reibungskupplung 80'(2) angedrückt wird (AP = Andruckpunkt). In einem anschließenden Zeitabschnitt bis zu einem Punkt GP bewegt sich die Schaltmuffe 88' nahezu gar nicht, aufgrund der Reibwirkung der Reibungskupplung 80'(2) wird jedoch zwischen der Welle 20 und dem Losrad 33' allmählich ein immer größerer Kraftschluß (Kraftschluß = 1 - Schlupf) erreicht, die Drehzahlen dieser Elemente nähern sich also an. Die Drehzahlen sind am Punkte GP (Gleichlaufpunkt) angeglichen (die Drehzahldifferenz ist kleiner als ein vorbestimmter Grenzwert). Im Anschluß hieran kann die Schaltmuffe 88' weiterbewegt werden, so daß sich kurz nach dem Gleichlaufpunkt der Formschluß zu 100 Prozent einstellt. Dabei springt der Formschluß F der formschlüssigen Kupplung 82'(2) von null Prozent auf 100 Prozent. Nach diesem Zeitpunkt wird die Schaltmuffe 88' weiterbewegt, bis zum Anschlag.

Entscheidend ist, daß der Kraftschluß von 100 Prozent oder annähernd 100 Prozent der Reibungskupplung 80'(2) von dem Gleichlaufpunkt GP bis zum Zeitpunkt FS des Formschlusses F oder darüber hinaus aufrechterhalten wird. Dies ist in Fig. 4 etwas übertrieben dargestellt. In der Realität kann der Kraftschluß K der Reibungskupplung 80'(2) unmittelbar nach Erzielung des Formschlusses F auf null Prozent abfallen.

Die erläuterte Betriebsweise der Kupplungseinrichtungen in den Antriebssträngen 10, 10' ermöglicht, daß ein Schaltvorgang unter Last erfolgen kann. Die Trennkupplung 14 wird während des Schaltvorganges folglich zumindest nicht vollkommen geöffnet. Dies bedeutet, daß die Reibungskupplung 80 (oder 80') das getriebeeingangsseitig über die Trennkupplung 14 anstehende Drehmoment auf die Abtriebswelle 24 übertragen muß, bis der Formschluß hergestellt ist. Die Reibungskupplungen 80 bzw. 80' sind entsprechend dimensioniert. Ferner kann eine Anpassung des eingangsseitigen Drehmomentes durch die Motorsteuerung 68 erfolgen.

Die dargestellte Betriebsweise läßt sich mit Kupplungseinrichtungen in Form herkömmlicher Sperr-Synchronisierungen allein aufgrund von deren Wirkungsweise nicht erzielen. Denn Sperr-Synchronkupplungen können aufgrund des mechanischen Sperrgliedes zwischen dem Erreichen des Gleichlaufpunktes und dem Formschluß kein Moment übertragen. Denn beim Übergang vom Gleichlaufpunkt zum Formschluß muß das mechanische Sperrglied entriegelt und durchgeschaltet werden. Hierbei bricht der Kraftschluß der Synchronkupplung zusammen.

Es versteht sich, daß anstelle des alleinigen Betätigens der Reibungskupplung 80'(2) beim Einlegen des zweiten Ganges auch parallel hierzu eine Reibungskupplung eines höheren Ganges (z.B. des dritten Ganges und/oder des vierten Ganges) betätigt werden kann, letztere allerdings nicht bis zu einem Kraftschluß von 100 Prozent, sondern allenfalls im Schlupfbetrieb. Dennoch läßt sich durch den parallelen Betrieb mehrerer Reibungskupplungen 80 (bzw. 80') das getriebeeingangsseitig anstehende Drehmoment und damit die Reibleistung gleichmäßiger verteilen. Da beim Übergang der Kupplungseinrichtung 52' vom Kraft- zum Reibschluß die Reibungskupplung des höheren Ganges im Schlupfbetrieb gehalten werden kann, sind besonders weiche Schaltvorgänge möglich.

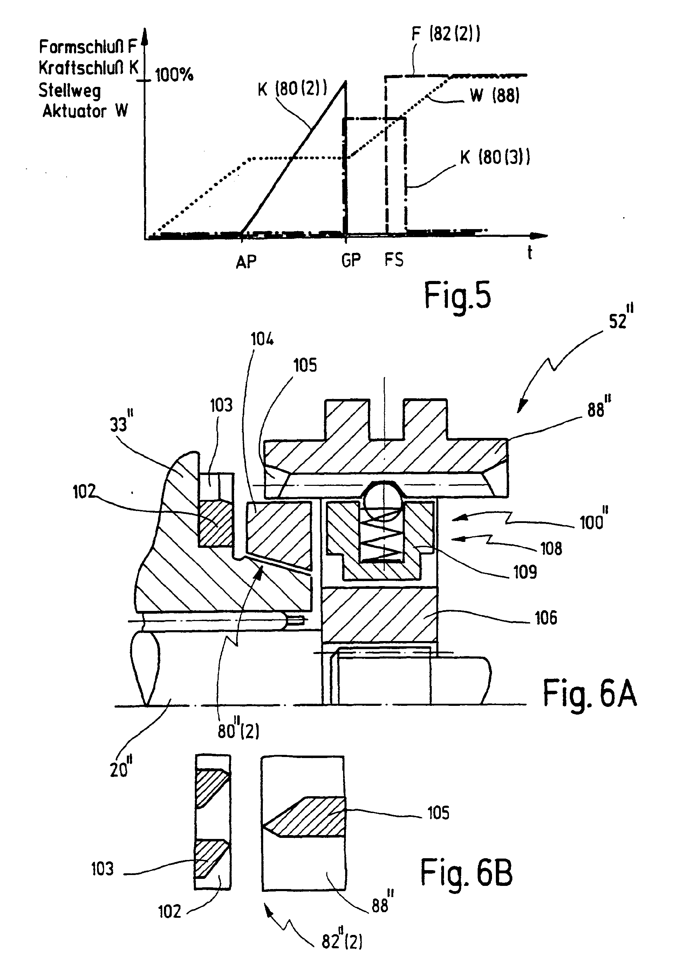

In Fig. 5 ist eine alternative Betriebsweise des Antriebsstranges 10 oder 10' gezeigt, bei der das Angleichen der Drehzahlen zwischen der Welle 20 und dem Losrad 33 allein mittels der zugeordneten Reibungskupplung 80(2) (bzw. 80'(2)) erfolgt.

Beim Gleichlaufpunkt GP betätigt man dann die Reibungskupplung 80(3) eines höheren Ganges (jedes dritten Ganges), um das Drehmoment zu übernehmen. Die Reibungskupplung 80(3) wird im Schlupfbetrieb betrieben und übernimmt das anstehende Drehmoment weitgehend vollständig, so daß die Reibungskupplung 80(2) des zweiten Ganges zum Zeitpunkt GP gelöst werden kann. Der Kraftschluß K der Reibungskupplung 80(2) bricht auf null Prozent zusammen. Da das anstehende Drehmoment von der Reibungskupplung 80(3) des dritten Ganges "gehalten" wird, läßt sich der Formschluß mittels der formschlüssigen Kupplung 82(2) quasi lastfrei herstellen. Daher ist es bei dieser Arbeitsweise generell denkbar, für zumindest die Kupplungseinrichtungen der unteren Gänge einen Aufbau vorzusehen, der vom Prinzip her, nicht unbedingt von den Abmessungen her, herkömmlichen Sperr-Synchronkupplungen entspricht.

In den Figuren 6A und 6B ist eine alternative Ausführungsform einer Kupplungseinrichtung 52'' gezeigt.

Die Kupplungseinrichtung 52'' umfaßt einen drehfest mit dem Losrad 33'' verbundenen Kupplungskörper 102 mit Zähnen 103, einen Reibring 104, eine drehfest und axial an der Welle 20'' festgelegte Führungsmuffe 106, eine Druckeinheit 108 sowie eine Führungsmuffe 88'', an der Zähne 105 vorgesehen sind, die zum Herstellen eines Formschlusses in die Zähne 103 des Kupplungskörpers 102 einrückbar sind.

Die Druckeinheit 108 weist einen Mitnehmerstein 109 auf, der axial in Anlage an den Reibring 104 gelangen kann.

In dem Mitnehmerstein 109 ist eine Koppeleinrichtung 100'' gelagert, die Axialkräfte zwischen der Schaltmuffe 88'' und dem Mitnehmerstein 109 aufnehmen kann, und zwar in einer Größenordnung von 1.000 N.

Die Betätigung der Kupplungseinrichtung 52'' erfolgt so, daß die Schaltmuffe 88'' mittels eines Aktuators axial bewegt wird. Durch die Tatsache, daß die Koppeleinrichtung 100'' etwa 1.000 N an Axialkräften aufnehmen kann, kann der Aktuator eine Axialkraft über den Mitnehmerstein und den Reibring 104 auf die Reibungskupplung 80''(2) bis zu diesem Kraftbetrag ausüben. Hierdurch erfolgt allmählich eine Drehzahlangleichung zwischen der Welle 20'' und dem Losrad 33''. Erst wenn eine Axialkraft an die Schaltmuffe 88'' angelegt wird, die 1.000 N übersteigt, also den Wert, den die Koppeleinrichtung 100'' aufnehmen kann, wird die Schaltmuffe 88'' relativ zu dem Mitnehmerstein 109 in Richtung auf den Kupplungskörper 102 axial bewegt, so daß eine formschlüssige Verbindung zwischen der Welle 20'' und dem Losrad 33'' erzielt wird.

Dabei versteht sich, daß die Drehzahlen zwischen der Welle 20'' und dem Losrad 33'' nicht zu 100 Prozent aneinander angeglichen sein müssen. Die Zähne 103, 105 sind, wie es in Fig. 6B gezeigt ist, asymmetrisch angespitzt, um ein Einspuren zu erleichtern.

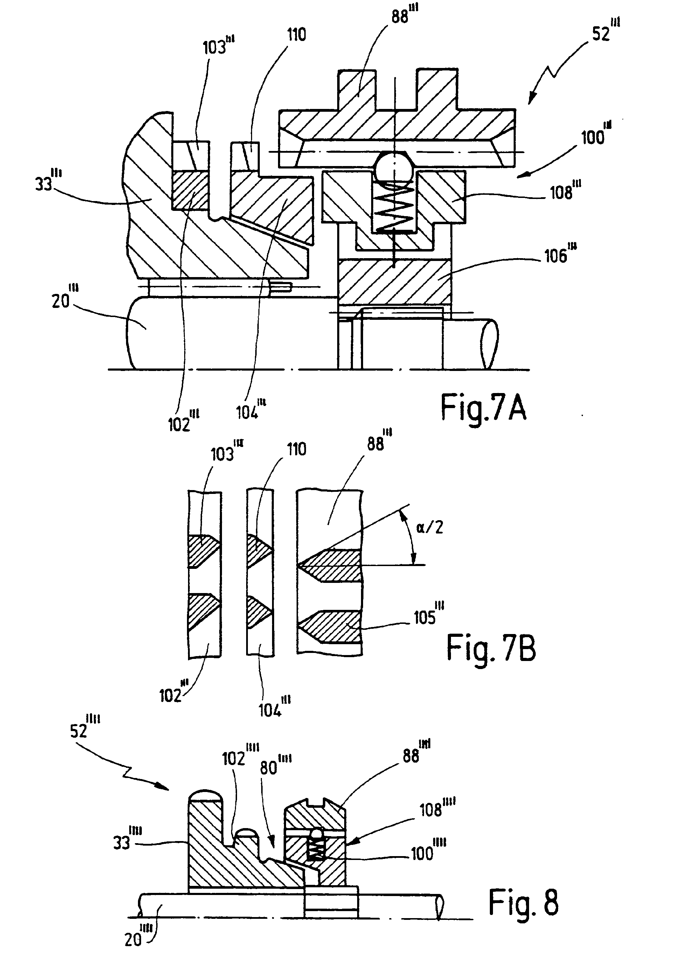

In den Figuren 7A und 7B ist eine weitere Ausführungsform einer Kupplungseinrichtung 52''' gezeigt. Gleiche Elemente wie bei der Ausführungsform wie in Fig. 6 sind mit gleichen Bezugsziffern, jedoch mit drei ' versehen. Man erkennt, daß in der Ausgangsposition der Abstand zwischen der Schaltmuffe 88''' und dem Kupplungskörper 102''' etwas größer ist. Ferner ist der Reibring 104''' mit Zähnen 110 versehen, der Reibring 104''' ist vom Prinzip her ähnlich aufgebaut wie ein Sperr-Synchronring. Allerdings ist der Anspitzungswinkel α bewußt untersperrend (z.B. <80°) ausgelegt, um einen vollkommenen Kraftschluß in axialer Richtung zwischen dem Reibring 104''' und dem Losrad 33''' zu verhindern. D.h., daß der Formschluß zwischen der Schaltmuffe 88''' und dem Losrad 33''' auch bei Vorliegen noch einer gewissen Differenzdrehzahl hergestellt werden kann. Wegen der zwischen den Verzahnungen 105''' und 110 aufgebauten Axialkräfte ist es jedoch möglich, die Koppeleinrichtung 100''' etwas kleiner zu dimensionieren. Zum Durchschalten ist also ein niedrigeres Kraftniveau notwendig als bei der Ausführungsform der Fig. 6. Allerdings muß unter einem auf die Schaltmuffe anstehenden Drehmoment durchgeschaltet werden, was zu zusätzlichen Reibkräften führt. Bei der Ausführungsform der Fig. 6 steht hingegen während des Schaltvorganges und des Durchschaltens kein Drehmoment an der Schaltmuffe an. Es ist also keine zusätzliche Reibungskraft zu überwinden.

In Fig. 8 ist schließlich eine vereinfachte Ausführungsform einer Kupplungseinrichtung 52'''' gezeigt, bei der eine Druckeinheit 108'''' ohne Führungsmuffe axial an einer Welle 20'''' axial versetzbar ist. Auch ist zwischen der Druckeinheit 108'''' und dem Losrad 33'''' kein Reibring vorhanden. Das Schaltverhalten ist bei dieser Ausführungsform nicht so komfortabel wie bei den Ausführungsformen der Figuren 6 und 7, ermöglicht jedoch auch eine erfindungsgemäße Betriebsweise des Antriebsstranges.

Die Druckeinheiten 108, 108''', 108'''' können, wie dargestellt, mittels mehrerer konventioneller Mitnehmersteine in Form von Stein, Kugel, Druckfeder realisiert werden, wobei sehr große Überschaltkräfte vorgegeben sind. Die Ausrückkraft wird durch die Gesamtfederrate der Druckfedern, der Anzahl der Mitnehmersteine und der Nutgeometrie in der Schaltmuffe bestimmt.

Alternativ hierzu ist es möglich, daß beidseitig der Führungsmuffe angeordnete Ringfedern in entsprechend geformte Mitnehmersteine eingreifen. Dabei wird die Ausrückkraft durch die Gesamtfederrate der Ringfedern, die Anzahl der Mitnehmersteine und die Nutgeometrie in der Schaltmuffe bestimmt. Diese Ausführungsform ist nicht dargestellt, der Fachmann kennt solche Druckeinheiten jedoch dem Prinzip nach. Auch hierbei müssen extrem hohe Axialkräfte >800 N aufgenommen werden.

Eine weitere Möglichkeit besteht darin, zur Reduzierung der Federkräfte ein Feder-Hebel-System vorzusehen, das die Axialkräfte erzeugt. Dabei wird dann die Ausrückkraft durch die Gesamtfederrate der Federn, die Hebelübersetzung, die Anzahl der Systeme und die Nutgeometrie in der Schaltmuffe bestimmt.

Auch ist es denkbar, daß in beide Synchronringe und in die Schaltmuffennut eingreifende Blattfedern die Axialkraft erzeugen. In diesem Fall wird die Ausrückkraft durch die Gesamtfederrate der Blattfedern, die Anzahl der Blattfedern und die Nutgeometrie in der Schaltmuffe bestimmt.

## Patentansprüche

1. Verfahren zum Lastschalten eines Antriebsstranges (10') für ein Kraftfahrzeug, wobei der Antriebsstrang (10') aufweist:
- eine Trennkupplung, deren Eingangsglied mit einer Motorausgangswelle verbunden ist, und
- ein Stufengetriebe, das eingangsseitig mit einem Ausgangsglied der Trennkupplung verbunden ist und eine Mehrzahl von Radsätzen aufweist, wobei wenigstens ein Radsatz ein an einer Welle (20') gelagertes Losrad (33') aufweist, das mittels einer zugeordneten Kupplungseinrichtung (52') drehfest mit der Welle (20') verbindbar ist,
- und wobei das Schaltverfahren die Schritte aufweist:
- formschlüssiges Verbinden von Losrad (33') und Welle (20'), während die Trennkupplung zumindest nicht vollständig geöffnet wird,
wobei die Drehzahlen von Losrad (33') und Welle (20') mittels einer Reibungskupplung (80'(2)) der Kupplungseinrichtung (52') angeglichen werden, bevor der Vorgang des formschlüssigen Verbindens von Losrad (33') und Welle (20') erfolgt, und wobei das anstehende Drehmoment von der Reibungskupplung (80'(2)) und/oder wenigstens einer weiteren Reibungskupplung wenigstens so lange gehalten wird, bis der Formschluß zwischen Losrad (33') und Welle (20') erreicht ist,
**dadurch gekennzeichnet, daß** die Kupplungseinrichtung (52') eine formschlüssige Kupplung (82'(2)) aufweist, wobei die Reibungskupplung (80'(2)) der Kupplungseinrichtung (52') und die formschlüssige Kupplung (82'(2)) über eine Koppeleinrichtung (100) miteinander gekoppelt und mittels eines einzelnen Aktuators (64; 90') so ansteuerbar sind, daß die Kupplungseinrichtung (52') unter Last betätigbar ist.

2. Verfahren nach Anspruch 1, **dadurch gekennzeichnet, daß** das Angleichen der Drehzahlen von Losrad (33') und Welle (20') mittels der Reibungskupplung (80'(2)) und der wenigstens einer weiteren Reibungskupplung erfolgt, die einer weiteren Kupplungseinrichtung eines weiteren Radsatzes zugeordnet ist.

3. Verfahren nach Anspruch 1, **dadurch gekennzeichnet, daß** das Angleichen der Drehzahlen von Losrad (33') und Welle (20') ausschließlich mittels der Reibungskupplung (80'(2)) der Kupplungseinrichtung (52') erfolgt.

4. Verfahren nach einem der Ansprüche 1 - 3, **dadurch gekennzeichnet, daß** nach dem Angleichen der Drehzahlen von Losrad (33') und Welle (20') das anstehende Drehmoment ausschließlich von der wenigstens einen weiteren Reibungskupplung wenigstens so lange gehalten wird, bis der Formschluß erreicht ist.

5. Verfahren nach einem der Ansprüche 1 - 4, **dadurch gekennzeichnet, daß** die Drehzahlen (96,98) des Losrades (33') und der Welle (20') gemessen werden und daß die Drehzahlen (96, 98) als angeglichen gelten, wenn der Betrag der Drehzahldifferenz kleiner ist als ein vorbestimmter Grenzwert.

6. Verfahren nach einem der Ansprüche 1 - 5, **dadurch gekennzeichnet, daß** die Reibungskupplung (80'(2)) und die formschlüssige Kupplung (82'(2)) jeweils ein in axialer Richtung wirkendes Stellglied (81'(2), 83'(2)) aufweisen und daß die Koppeleinrichtung (100; 108) zwischen den Stellgliedern (81'(2), 83'(2)) Axialkräfte von mehr als 300 N, vorzugsweise von mehr als 500 N, insbesondere mehr als 800 N aufnimmt, bevor die Stellglieder (81'(2), 83'(2)) in axialer Richtung gegeneinander versetzbar sind.

7. Verfahren nach einem der Ansprüche 1 - 6, **dadurch gekennzeichnet, daß** die Reibungskupplung (80''') als Kegelkupplung ausgebildet ist und wenigstens einen drehfest mit dem Losrad (33''') verbundenen Reibkonus, wenigstens einen drehfest mit der Welle (20''') verbundenen und axial gegenüber der Welle (20''') versetzbaren Reibring (104''') und eine drehfest mit der Welle (20''') verbundene und axial gegenüber der Welle (20''') versetzbare Druckeinheit (108''') aufweist, die auf den Reibring (104''') wirkt, und daß die die Axialkräfte aufnehmende Koppeleinrichtung zwischen der Druckeinheit (108''') und einem mit dem Aktuator verbundenen Stellglied (88''') vorgesehen ist.

8. Verfahren nach Anspruch 7, **dadurch gekennzeichnet, daß** der Reibring (104''') Sperrzähne (110) aufweist, die einen spitzen, untersperrenden Sperrwinkel (") aufweisen.

9. Lastschaltbarer Antriebsstrang (10') für ein Kraftfahrzeug, insbesondere zum Durchführen des Verfahrens nach einem der Ansprüche 1 - 10, mit
- einer Trennkupplung, deren Eingangsglied mit einer Motorausgangswelle verbunden ist,
- einem Stufengetriebe, das eingangsseitig mit dem Ausgangsglied der Trennkupplung verbunden ist und eine Mehrzahl von Radsätzen aufweist, wobei wenigstens ein Radsatz ein an einer Welle (20') gelagertes Losrad (33') aufweist, das mittels einer zugeordneten Kupplungseinrichtung (52') unter Last formschlüssig mit der Welle (20') verbindbar ist, und
- einer Steuereinrichtung zum Betätigen der Trennkupplung und der Kupplungseinrichtung (52'),
wobei die Kupplungseinrichtung (52') eine Reibungskupplung (80'(2)) aufweist, mittels der die Drehzahlen von Losrad (33') und Welle (20') aneinander angleichbar sind, bevor das Losrad (33') und die Welle (20') formschlüssig miteinander verbunden werden, und wobei die Steuereinrichtung so programmiert und die Reibungskupplung (80'(2)) so ausgelegt ist, daß das anstehende Drehmoment von der Reibungskupplung (80'(2)) und/oder wenigstens einer weiteren Reibungskupplung wenigstens so lange gehalten wird, bis der Formschluß zwischen Losrad (33') und Welle (20') erreicht ist,
**dadurch gekennzeichnet, daß** die Kupplungseinrichtung (52') eine formschlüssige Kupplung (82'(2)) aufweist, wobei die Reibungskupplung (80'(2)) der Kupplungseinrichtung (52') und die formschlüssige Kupplung (82'(2)) über eine Koppeleinrichtung (100) miteinander gekoppelt und mittels eines einzelnen Aktuators (64; 90') so ansteuerbar sind, daß die Kupplungseinrichtung (52') unter Last betätigbar ist.

## Claims

1. Method for powershifting a drivetrain (10') for a motor vehicle, with the drivetrain (10') having:
- a separating clutch whose input element is connected to an engine output shaft, and
- a multi-step transmission which is connected at the input side to an output element of the separating clutch and which has a plurality of gear sets, with at least one gear set having a loose wheel (33') which is mounted on a shaft (20') and which can be rotationally fixedly connected to the shaft (20') by means of an associated clutch device (52'),
- and with the shift process comprising the steps:
- connecting the loose wheel (33') and shaft (20') in a form-fitting manner, while the separating clutch is at least not completely opened,
with the rotational speeds of the loose wheel (33') and shaft (20') being aligned by means of a friction clutch (80'(2)) of the clutch device (52') before the process of connecting the loose wheel (33') and shaft (20') in a form-fitting manner takes place, and with the applied torque being held by the friction clutch (80'(2)) and/or by at least one further friction clutch at least until the form-fitting connection between the loose wheel (33') and shaft (20') is obtained,
**characterized in that** the clutch device (52') has a form-fitting clutch (82'(2)), with the friction clutch (80'(2)) of the clutch device (52') and the form-fitting clutch (82'(2)) being coupled to one another by means of a coupling device (100) and being activatable by means of a single actuator (64; 90') in such a way that the clutch device (52') can be actuated under load.

2. Method according to Claim 1, **characterized in that** the alignment of the rotational speeds of the loose wheel (33') and shaft (20') takes place by means of the friction clutch (80'(2)) and the at least one further friction clutch which is assigned to a further clutch device of a further gear set.

3. Method according to Claim 1, **characterized in that** the alignment of the rotational speeds of the loose wheel (33') and shaft (20') takes place exclusively by means of the friction clutch (80'(2)) of the clutch device (52').

4. Method according to one of Claims 1-3, **characterized in that**, after the alignment of the rotational speeds of the loose wheel (33') and shaft (20'), the applied torque is held exclusively by the at least one further friction clutch at least until the form-fitting connection is obtained.

5. Method according to one of Claims 1-4, **characterized in that** the rotational speeds (96, 98) of the loose wheel (33') and of the shaft (20') are measured and **in that** the rotational speeds (96, 96) are deemed to have been aligned when the magnitude of the rotational speed difference is smaller than a predetermined limit value.

6. Method according to one of Claims 1-5, **characterized in that** the friction clutch (80'(2)) and the form-fitting clutch (82'(2)) have in each case one adjusting element (81'(2), 83'(2)) which acts in the axial direction, and **in that** the coupling device (100; 108) between the adjusting elements (81'(2), 83'(2)) absorbs axial forces of more than 300 N, preferably of more than 500 N, in particular of more than 800 N, before the adjusting elements (81'(2), 83'(2)) can be displaced with respect to one another in the axial direction.

7. Method according to one of Claims 1-6, **characterized in that** the friction clutch (80"') is embodied as a cone clutch and has at least one friction cone which is rotationally fixedly connected to the loose wheel (33'''), at least one friction ring (104''') which is rotationally fixedly connected to the shaft (20''') and which can be displaced axially with respect to the shaft (20'''), and a pressure unit (108''') which is rotationally fixedly connected to the shaft (20''') and which can be displaced axially with respect to the shaft (20''') and which acts on the friction ring (104'''), and **in that** the coupling device which absorbs the axial forces is provided between the pressure unit (108''') and an adjusting element (88"') which is connected to the actuator.

8. Method according to Claim 7, **characterized in that** the friction ring (104''') has locking teeth (110) which have an acute, under-locking locking angle (").

9. Powershiftable drivetrain (10') for a motor vehicle, in particular for carrying out the method according to one of Claims 1-10, having
- a separating clutch whose input element is connected to an engine output shaft,
- a multi-step transmission which is connected at the input side to the output element of the separating clutch and which has a plurality of gear sets, with at least one gear set having a loose wheel (33') which is mounted on a shaft (20') and which can be connected in a form-fitting manner to the shaft (20') under load by means of an associated clutch device (52'), and
- a control device for actuating the separating clutch and the clutch device (52'),
with the clutch device (52') having a friction clutch (80'(2)), by means of which the rotational speeds of the loose wheel (33') and shaft (20') can be aligned with one another, before the loose wheel (33') and the shaft (20') are connected to one another in a form-fitting manner, and with the control device being programmed, and the friction clutch (80'(2)) being designed, in such a way that the applied torque is held by the friction clutch (80'(2)) and/or by at least one further friction clutch at least until the form-fitting connection between the loose wheel (33') and shaft (20') is obtained,
**characterized in that** the clutch device (52') has a form-fitting clutch (82'(2)), with the friction clutch (80'(2)) of the clutch device (52') and the form-fitting clutch (82'(2)) being coupled to one another by means of a coupling device (100) and being activatable by means of a single actuator (64; 90') in such a way that the clutch device (52') can be actuated under load.

## Revendications

1. Procédé pour le changement de vitesse d'un train d'engrenages (10') pour un véhicule automobile, dans lequel le train d'engrenages (10') comprend:
- un embrayage de coupure, dont l'élément d'entrée est relié à un arbre de sortie du moteur, et
- une boîte de vitesses étagée, qui est reliée côté entrée à un élément de sortie de l'embrayage de coupure et comporte une pluralité de jeux de roues, dans laquelle au moins un jeu de roues comprend une roue libre (33') montée sur un arbre (20') et qui peut être reliée à l'arbre (20'), de manière solidaire en rotation, au moyen d'un dispositif d'embrayage associé (52'),
- et dans lequel le procédé de changement de vitesse comprend les opérations suivantes:
- la liaison par complémentarité de forme de la roue libre (33') à l'arbre (20'), tandis que l'embrayage de coupure n'est au moins pas complètement ouvert,
dans lequel on égalise les vitesses de rotation de la roue libre (33') et de l'arbre (20') au moyen d'un embrayage à friction (80'(2)) du dispositif d'embrayage (52'), avant d'effectuer l'opération de liaison par complémentarité de forme de la roue libre (33') et de l'arbre (20'), et dans lequel le couple de rotation créé est maintenu par l'embrayage à friction (80'(2)) et/ou au moins un autre embrayage à friction au moins jusqu'à ce que la liaison par complémentarité de forme entre la roue libre (33') et l'arbre (20') soit réalisée,
**caractérisé en ce que** le dispositif d'embrayage (52') comporte un embrayage par complémentarité de forme (82'(2)), dans lequel l'embrayage à friction (80'(2)) du dispositif d'embrayage (52') et l'embrayage par complémentarité de forme (82'(2)) sont couplés l'un à l'autre au moyen d'un dispositif d'embrayage (100) et peuvent être commandés au moyen d'un actionneur unique (64; 90'), de telle manière que le dispositif d'embrayage (52') puisse être actionné sous une charge.

2. Procédé selon la revendication 1, **caractérisé en ce que** l'on effectue l'égalisation des vitesses de rotation de la roue libre (33') et de l'arbre (20') au moyen de l'embrayage à friction (80'(2)) et dudit au moins un autre embrayage à friction, qui est associé à un autre embrayage à friction d'un autre jeu de roues.

3. Procédé selon la revendication 1, **caractérisé en ce que** l'on effectue l'égalisation des vitesses de rotation de la roue libre (33') et de l'arbre (20') exclusivement au moyen de l'embrayage à friction (80'(2)) du dispositif d'embrayage (52').

4. Procédé selon l'une quelconque des revendications 1 à 3, **caractérisé en ce que**, après l'égalisation des vitesses de rotation de la roue libre (33') et de l'arbre (20'), le couple de rotation créé est maintenu exclusivement par ledit au moins un autre embrayage à friction au moins jusqu'à ce que la liaison par complémentarité de forme soit réalisée.

5. Procédé selon l'une quelconque des revendications 1 à 4, **caractérisé en ce que** l'on mesure les vitesses de rotation (96, 98) de la roue libre (33') et de l'arbre (20') et **en ce que** l'on considère les vitesses de rotation (96, 98) comme égalisées lorsque la valeur de la différence entre les vitesses de rotation est inférieure à une valeur limite prédéterminée.

6. Procédé selon l'une quelconque des revendications 1 à 5, **caractérisé en ce que** l'embrayage à friction (80'(2)) et l'embrayage par complémentarité de forme (82'(2)) comprennent respectivement un organe de réglage (81'(2)), (83'(2)) agissant en direction axiale et **en ce que** le dispositif d'embrayage (100; 108) entre les organes de réglage (81'(2)), (83'(2)) reprend des forces axiales de plus de 300 N, de préférence de plus de 500 N, de préférence encore de plus de 800 N, avant que les organes de réglage (81'(2)), (83'(2)) puissent être déplacés l'un vers l'autre en direction axiale.

7. Procédé selon l'une quelconque des revendications 1 à 6, **caractérisé en ce que** l'embrayage à friction (80''') est un embrayage conique et présente au moins un cône de friction relié de manière solidaire en rotation à la roue libre (33'''), au moins une bague de friction (104"') reliée de manière solidaire en rotation à l'arbre (20''') et déplaçable axialement par rapport à l'arbre (20'''), et une unité de pression (108''') reliée de manière solidaire en rotation à l'arbre (20''') et déplaçable axialement par rapport à l'arbre (20'''), qui agit sur la bague de friction (104'''), et **en ce que** le dispositif d'embrayage reprenant les forces axiales est prévu entre l'unité de pression (108''') et un organe de réglage (88"') relié à l'actionneur.

8. Procédé selon la revendication 7, **caractérisé en ce que** la bague de friction (104''') comporte des dents de blocage (110), qui présentent un angle aigu de blocage (") à blocage inférieur.

9. Train d'engrenages (10') à changement de vitesse pour un véhicule automobile, en particulier pour la mise en oeuvre du procédé selon l'une quelconque des revendications 1 à 10, comportant
- un embrayage de coupure, dont l'élément d'entrée est relié à un arbre de sortie du moteur, et
- une boîte de vitesses étagée, qui est reliée côté entrée à l'élément de sortie de l'embrayage de coupure et comporte une pluralité de jeux de roues, dans laquelle au moins un jeu de roues comprend une roue libre (33') montée sur un arbre (20') et qui peut être reliée sous une charge à l'arbre (20'), de manière solidaire en rotation, au moyen d'un dispositif d'embrayage associé (52'), et
- un dispositif de commande pour actionner l'embrayage de coupure et le dispositif d'embrayage (52'),
dans lequel le dispositif d'embrayage (52') comprend un embrayage à friction (80'(2)), au moyen duquel les vitesses de rotation de la roue libre (33') et de l'arbre (20') peuvent être égalisées, avant que la roue libre (33') et l'arbre (20') soient reliés l'un à l'autre par complémentarité de forme, et dans lequel le dispositif de commande est programmé et l'embrayage à friction (80'(2)) est conçu de telle manière que le couple de rotation créé soit maintenu par l'embrayage à friction (80'(2)) et/ou au moins un autre embrayage à friction au moins jusqu'à ce que la liaison par complémentarité de forme entre la roue libre (33') et l'arbre (20') soit réalisée,
**caractérisé en ce que** le dispositif d'embrayage (52') comprend un embrayage par complémentarité de forme (82'(2)), dans lequel l'embrayage à friction (80'(2)) du dispositif d'embrayage (52') et l'embrayage par complémentarité de forme (82'(2)) sont couplés l'un à l'autre au moyen d'un dispositif d'embrayage (100) et peuvent être commandés au moyen d'un actionneur unique (64; 90'), de telle manière que le dispositif d'embrayage (52') puisse être actionné sous une charge.
